(19) **Europäisches Patentamt**
**European Patent Office**
**Office européen des brevets**

(11) **EP 2 748 940 B1**

(12) **EUROPEAN PATENT SPECIFICATION**

(45) Date of publication and mention
of the grant of the patent:
**23.03.2016 Bulletin 2016/12**

(51) Int Cl.:
*H04L 1/00* (2006.01)       *H04B 7/04* (2006.01)
*H04L 1/20* (2006.01)

(21) Application number: **11878030.3**

(86) International application number:
**PCT/SE2011/051573**

(22) Date of filing: **22.12.2011**

(87) International publication number:
**WO 2013/095236 (27.06.2013 Gazette 2013/26)**

(54) **METHOD, NETWORK NODE, AND COMPUTER PROGRAM FOR DETERMINING RANK**

VERFAHREN, NETZWERKKNOTEN UND COMPUTERPROGRAMM ZUR BESTIMMUNG EINER RANGORDNUNG

PROCÉDÉ, N UD DE RÉSEAU, ET PROGRAMME D'ORDINATEUR POUR DÉTERMINER UN RANG

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2014 Bulletin 2014/27**

(73) Proprietor: **Telefonaktiebolaget LM Ericsson (publ)**
**164 83 Stockholm (SE)**

(72) Inventors:
• **FRÖBERG OLSSON, Jonas**
**SE-590 74 Ljungsbro (SE)**
• **FURUSKOG, Johan**
**SE-112 49 Stockholm (SE)**
• **RIBACK, Mathias**
**SE-183 51 Täby (SE)**

• **WERNER, Karl**
**SE-141 72 Segeltorp (SE)**
• **ELGCRONA, Anders**
**SE-183 55 Täby (SE)**

(74) Representative: **Brann AB**
**P.O. Box 3690**
**Drottninggatan 27**
**103 59 Stockholm (SE)**

(56) References cited:
**US-A1- 2010 002 598     US-A1- 2012 057 538**
**US-B1- 7 545 867**

• **'Real Life Issues for DL-MIMO' 3GPP TSG-RAN WG1 #66 22 August 2011, ATHENS, GREECE, XP050537824 Retrieved from the Internet: <URL:http://www.3gpp.org/ftp/tsg ran/WG1_RL1/TSGR1 66/Docs/R1-112640.zip>**

**Description**

**TECHNICAL FIELD**

The invention relates to determining a rank, indicating the number of layers to be used, in a multiple input multiple output, MIMO, transmitter in a mobile communication network.

**BACKGROUND**

In mobile communication systems such as Long Term Evolution (LTE), there is a large number of possible reporting schemes for channel state information (CSI). The schemes are quite complicated and demanding, especially on implementation in the user equipment (UE). Moreover, significant radio resources are consumed when the reports are fed back to the transmitter. With the higher-order MIMO (Multiple Input Multiple Output) support in release 10 and beyond of the specification from 3rd Generation Partnership Project (3GPP), even higher requirements are laid on the UE as well as the capacity of the feedback link. In addition to the CSI feedback, reference signals intended for estimation of channel state information (CSI) also consume scarce radio resources.. Patent publication US 2010002598 A1 describes measuring and reporting a rank and/or a precoding matrix for multiple- input multiple-output (MIMO) communication.

For MIMO schemes beyond Release 10, it would thus be desirable with a reduction of reporting requirements to avoid having too large overhead and UE complexity.

**SUMMARY**

The embodiments presented herein eliminate or at least alleviate the problems described above.

In a first aspect, it is presented a method for determining a rank indicating the number of layers to be used by a multiple input multiple output, MIMO, transmitter in a mobile communication network, the method being executed in a network node of the mobile communication network. The method comprises the steps of: obtaining success measurements indicating whether data frames, comprising user data, have been successfully transmitted between the network node and a mobile communication terminal for each one of a plurality of ranks; determining usage frequencies for each one of the plurality of ranks based on the success measurements for the respective ranks; and determining the rank to be used for transmission between the network node and the mobile communication terminal based on the highest usage frequency.

The step of obtaining success measurements comprises obtaining positive and negative acknowledgements of previously sent data frames comprising user data. The step of determining usage frequencies comprises, for a specific rank, increasing the usage frequency for the specific rank for positive acknowledgement results and decreasing the usage frequency for the specific rank for negative acknowledgement results.

By using the usage frequencies, not only the rank which is currently thought to be the best one is used. Other ranks are used according to the usage frequencies, whereby the network node is not locked to a particular rank, which in reality, may prove not to be the most appropriate rank.

The step of obtaining success measurements may comprise obtaining success measurements comprising positive and negative acknowledgements of previously sent data frames comprising user data. Such acknowledgements are readily available and do not burden the user equipment or network node with additional signalling requirements.

The step of determining usage frequencies may comprise, for a specific rank, increasing the specific usage frequency for the specific rank for positive acknowledgement results and decreasing the specific usage frequency for the specific rank for negative acknowledgement results.

The amount of change for the increased usage frequency may be smaller than the amount of change for the decreased usage frequency. This is because a single failed transfer can be taken more seriously than a single successful transfer.

An adjusted amount of change for the decreased usage frequency may be calculated by dividing an original amount of change for the decreased usage frequency with the previously determined usage frequency for the associated rank. This increases convergence properties, since different ranks will be triggered at varying intervals.

The positive and negative acknowledgements may be ACKs and NACKs which are sent from the mobile communication terminal for a hybrid automatic repeat request, HARQ, algorithm used for control of transmission of data from the network node to the mobile communication terminal.

The step of determining the rank to be used may comprise: selecting a rank to be used for transmission between the network node and the mobile communication terminal such that a usage frequency over several iterations approaches the determined usage frequencies. In other words, the method conforms to the usage frequencies, at least over time if the usage frequencies do not change too much.

The step of determining usage frequencies may comprise determining respective estimated throughputs for each one of the plurality of ranks based on the success measurements and determining usage frequencies depending on the estimated throughput for the respective ranks, such that ranks with a greater estimated throughput are assigned a greater usage frequency.

Non-zero usage frequencies may be assigned only to the rank with the greatest usage frequency and adjacent ranks.

The method may be repeated.

The success measurements may indicate whether a data frame, comprising user data, from the network node has been successfully received at the mobile communication terminal.

The success measurement may indicate whether a data frame, comprising user data, from the mobile communication terminal has been successfully received at the network node.

The method may further comprise the step of: assigning initial usage frequencies to each one of the plurality of ranks.

The step of assigning initial usage frequencies may comprise assigning equal usage frequencies to each one of each one of the plurality of ranks. This ensures that the different ranks will be tested for actual performance.

A second aspect is a network node in a mobile communication network. The network node comprises: a multiple input multiple output, MIMO, transmitter; a controller arranged to obtain success measurements indicating whether data frames, comprising user data, have been successfully transmitted between the network node and a mobile communication terminal for each one of a plurality of ranks. The controller is further arranged to determine usage frequencies for each one of the plurality of ranks based on the success measurements for the respective ranks; and to determine a rank based on the highest usage frequency, the rank indicating the number of layers to be used by the MIMO transmitter for transmission between the network node and the mobile communication terminal. The controller obtains the success measurements comprising positive and negative acknowledgements of previously sent data frames comprising user data, and determines usage frequencies, for a specific rank, by increasing the usage frequency for the specific rank for positive acknowledgement results and decreasing the usage frequency for the specific rank for negative acknowledgement results.

A third aspect is a base station comprising the network node according to the second aspect.

The base station may be an evolved node B node complying with the Long Term Evolution family of standards.

A fourth aspect is a computer program for determining a rank indicating the number of layers to be used by a multiple input multiple output, MIMO, transmitter in a mobile communication network. The computer program comprises computer program code which, when run on a network node of the mobile communication network, causes the network node to: obtain success measurements indicating whether data frames, comprising user data, have been successfully transmitted between the network node and a mobile communication terminal for each one of a plurality of ranks; determine usage frequencies for each one of the plurality of ranks based on the success measurements for the respective ranks; and determine the rank to be used for transmission between the network node and the mobile communication terminal based on the highest usage frequency. The step of obtaining success measurements comprises obtaining positive and negative acknowledgements of previously sent data frames comprising user data. The step of determining usage frequencies comprises, for a specific rank, increasing the usage frequency for the specific rank for positive acknowledgement results and decreasing the usage frequency for the specific rank for negative acknowledgement results

A fifth aspect is a computer program product comprising a computer program according to the fourth aspect and a computer readable means on which the computer program is stored.

It is to be noted that any feature of any aspect may be applied, where possible, to any other aspects.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of example, with reference to the accompanying drawings, in which:

Fig 1 is a schematic diagram illustrating a mobile communication system where embodiments presented herein can be applied;

Fig 2 is a schematic diagram illustrating some transmitter components of an evolved node B of Fig 1;

Fig 3 is a graph illustrating usage frequencies assigned to various ranks in a transmitter of the mobile communication system of Fig 1;

Figs 4A-B are flow charts illustrating methods which can be used in embodiments used in the mobile communication system of Fig 1;

Fig 5 is a schematic diagram showing some components of the e-Node B of Fig 1; and

Fig 6 shows one example of a computer program product comprising computer readable means.

## DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

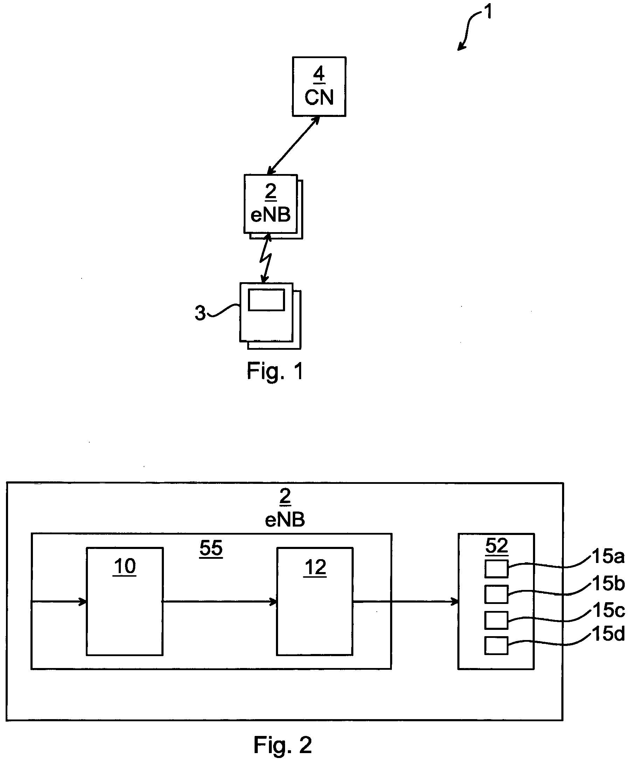

Fig 1 is a schematic diagram illustrating a mobile communication network 1 where embodiments presented herein can be applied. The mobile communications network 1 comprises a core network 4 and one or more evolved Node Bs 2, also known as e-Node Bs or eNBs. The eNBs 2 provide radio connectivity to a plurality of mobile communication terminals 3. The term mobile communication terminal is also known as mobile terminal, user equipment, user terminal, user agent, etc.

The mobile communication network, can e.g. comply with LTE (Long Term Evolution) or with any one or a combination of UMTS (Universal Mobile Telecommunications System), CDMA2000 (Code Division Multiple Access 2000), etc. capable of MIMO transmission.

Fig 2 is a schematic diagram illustrating some transmitter components of an eNB 2 of Fig 1. The eNB 2 comprises a MIMO transmitter 55 with can be part of a transceiver or a separate transmitter. The transmitter 55 comprises a layer mapper 10 and a pre-coder 12. The layer mapper 10 receives data to be sent and maps the data to one or more layers. The number of layers being used at any one time is the rank at that time. The rank can be changed over time to adjust to changing radio conditions, as is explained in more detail below.

The pre-coder 12 transforms the layers to symbols to be sent using a plurality of antenna elements 15a-d of the antenna 52, e.g. using a pre-coding matrix. The rank is equal to or less than the number of antenna elements 15a-d. In this example, four antenna elements 15a-d are used, but there can be any number of antenna elements 15a-d, including two, eight, etc.

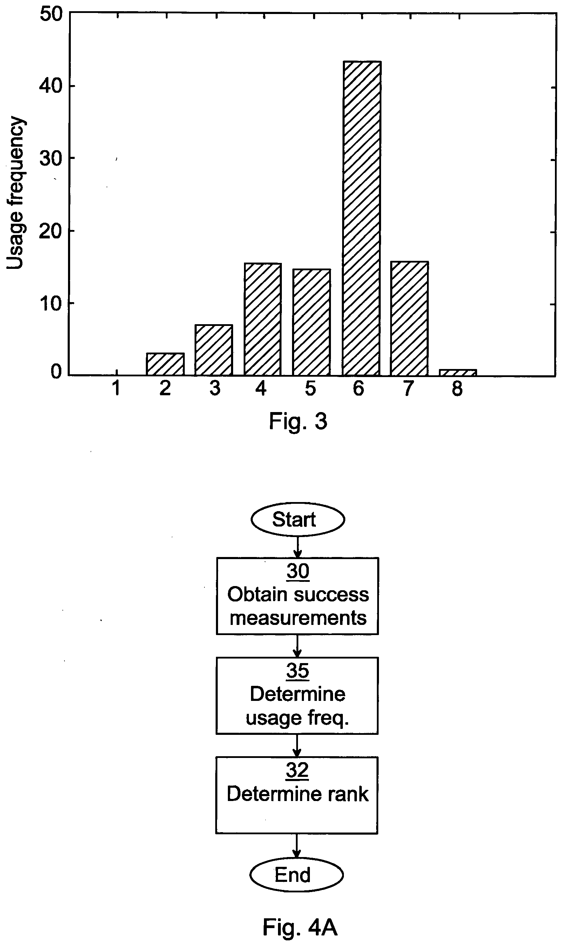

Fig 3 is a graph illustrating usage frequencies assigned to various ranks in a transmitter of the mobile communication system of Fig 1. In this example, ranks in the range of [1..8] are possible. The usage frequencies depend on estimated throughput, which in turn depends on error rate, as is explained in more detail below. Here, the rank 6 is expected to give the highest throughput and thus rank 6 has the highest usage frequency.

The usage frequency can be expressed in percentages as seen in Fig 3 or other numerical values. In any case the usage frequency reflects the expected performance for a rank, such that a rank which is expected to provide better performance is given a higher usage frequency.

In a MIMO system it is beneficial to adapt the number of transmitted layers, i.e. rank, to match the channel conditions experienced by the mobile communication terminal to which a given transmission is intended. The question is how to make a good rank choice with absent or very limited CSI feedback, to which a solution is shown here.

The reason a higher rank can give a higher throughput is that more layers can be used. On the other hand more layers can lead to greater interference, greater error rate and lower throughput. Analogously, a lower rank leads to less interference, lower error rate and higher throughput, but lower throughput due to fewer layers.

It is the conditions affecting the wireless data transfer between the eNB and the mobile communication terminal in question which governs the throughput, and thus usage frequency, for the different ranks. In other words, for the same eNB, the rank of six may be the rank expected to give the highest throughput to a first mobile communication terminal, while the rank of four may be the rank expected to give the highest throughput to a second mobile communication terminal.

It has been realised though that the estimates may not be accurate, and in reality, a rank with a lower expected throughput in fact gives a higher throughput. It is thus here suggested to provide a transmitter where various ranks are tested to get a more accurate estimate. The idea here is to determine usage frequencies for several ranks such that not only the rank which is currently thought to give the best results is used. For example, rank four in Fig. 3 has a usage frequency of about 16. In this example, rank four will be used at 16% of the cases of transmission.

When transmission occurs, the usage frequency for the currently used rank is adjusted in accordance with throughput, which is thus affected by error rates. So when rank four is used, the usage frequency for rank four is adjusted. If it just so happens that rank four has been underestimated in throughput, and therefore also the usage frequency has been underestimated, this will be adjusted each time transmission occurs at rank four. In this way, the usage frequency for all ranks with a usage frequency greater than zero will be adjusted with feedback from actual transmission and the usage frequencies are dynamically adjusted to reflect the current radio environment between the eNB and the mobile communication terminal. By selecting ranks using the usage frequency rather than always selecting the rank with the best estimated performance, a plurality of ranks are tested to thereby receive a more accurate measurement which allows all ranks to be dynamically adjusted over time.

In other words, it is here proposed to most often use the rank that is believed to be best (since it has the highest usage frequency) but, with a certain lower frequency, try other ranks in order to support link adaptation. One or more control loops are used per rank. Each control loop can for example take as input the ACK and NACK feedback that is related to the use of that particular rank.

In another example, in a 4x4 MIMO system, the currently believed best rank could be r=2, where r represents a rank. Then for most transmission time intervals (TTIs), r=2 is utilised, but periodically r=1, 3, or 4 is used (where these other ranks have been assigned lower usage frequencies). Clearly, the higher the usage frequencies for the other ranks are, the faster a new best rank is discovered. But this comes to the expense that a larger proportion of radio resources (e.g. transmission time slots) are used for transmitting with a rank that is currently not assumed to be the optimal. On the other hand, a longer probe-period results in a performance loss due to that when the best rank change it will take longer time until this will be detected by the link adaptation algorithm.

The usage frequencies can be assigned depending on the estimated throughput for the individual ranks. For example, assume that $r_{best}$ is the rank that is estimated to provide the highest throughput. Then probing frequencies $f_r$ for rank r could be assigned such that $f_{r1} > f_{r2}$ when $|r_1 - r_{best}| < |r_2 - r_{best}|$ In the most extreme case, the probe-frequencies could be set to zero for all other ranks than $r_{best}$ -1 and $r_{best}$ +1. In Fig 3, $r_{best}$ is clearly 6.

It has been realised that often, only a localised search around the currently estimated best rank is required to obtain a search algorithm that can find the globally optimal rank.

Fig 4A is a flow chart illustrating a method which can be used in embodiments used in the mobile communication system of Fig 1. The method is used to determining a rank indicating the number of layers to be used in a multiple input multiple output, MIMO, transmitter in a mobile communication network. The method is executed in a network node, such as the eNB of Fig 1.

In an initial obtain success measurements step 30, success measurements are obtained which indicate whether data frames, comprising user data, have been successfully transmitted between the network node 2 and the mobile communication terminal 3 for each one of a plurality of ranks.

The success measurements can optionally comprise positive and negative acknowledgements of previously sent data frames comprising user data, i.e. data sent from the eNB to the mobile communication terminal or vice versa.

In one embodiment, the positive and negative acknowledgements are ACKs and NACKs which are sent from the mobile communication terminal for a hybrid automatic repeat request (HARQ) algorithm used for control of transmission of data from the network node to the mobile communication terminal. Measurements are obtained for each one of a plurality of ranks.

The success measurements can be both positive and negative acknowledgements of previously sent data frames comprising user data.

In a determine usage frequencies step 35, usage frequencies are determined for each one of the plurality of ranks based on the success measurements for the respective ranks. This can optionally occur after each obtained success measurement.

In a determine rank step 32, the rank to be used is determined for transmission between the network node and the mobile communication terminal based on the usage frequencies.

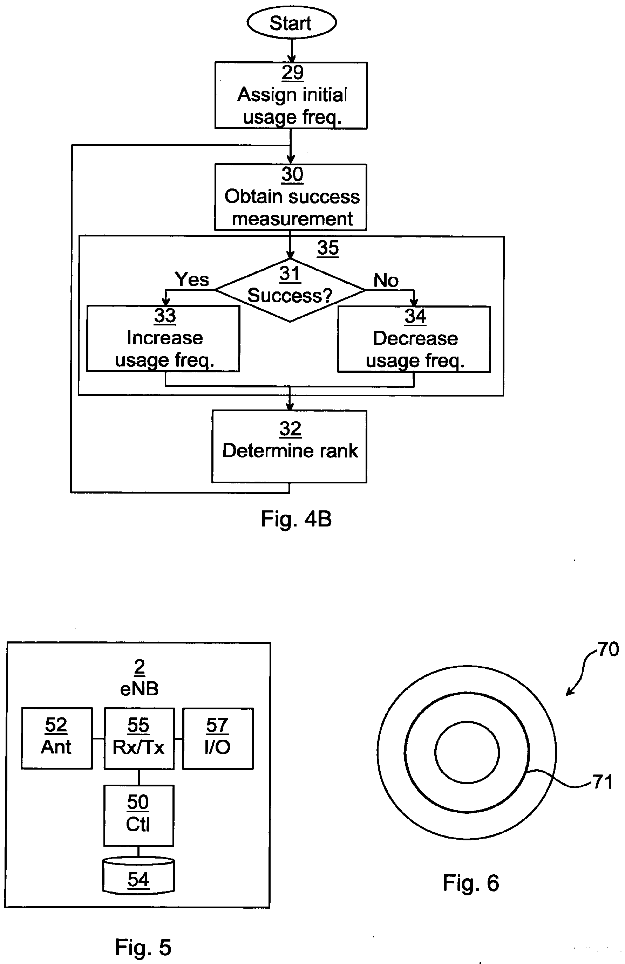

Fig 4B is a flow chart illustrating a method which can be used in embodiments used in the mobile communication system of Fig 1. The method is similar to the method of Fig 4A. The embodiment described here utilises one (or more) control loops per rank triggered by corresponding success measurements.

In an assign initial usage frequencies step 29, initial usage frequencies are assigned to all relevant ranks. This ensures that the various ranks have probabilities of use that is greater than zero, whereby all these ranks will be tested in the method. In one embodiment, all relevant ranks are assigned equal usage frequencies at this stage. During the progression of the method, the usage frequencies for the various ranks will be adjusted to reflect actual performance.

The obtain success measurement step 30 is equivalent to the obtain success measurement step 30 of Fig 4A.

In a conditional success step 31, it is determined whether the obtained success measurement is positive or negative. If it is positive, indicating success, then the method proceeds to an increase usage frequency step 33. Otherwise, the method proceeds to a decrease usage frequency step 34. As one example, HARQ ACKs are considered to be positive success measurements and HARQ NACKs are considered to be negative success measurements.

In the increase usage frequency step 33, the usage frequency for the rank that the success measurement relates to is increased.

In the decrease usage frequency step 34, the usage frequency for the rank that the success measurement relates to is decreased. According to an optional jump algorithm, the increase for each positive indication, e.g. ACK, can be smaller than the decrease for each negative indication, e.g. NACK. In this way, failures have a greater impact than successful transmissions. In other words, this control loop may be a jump algorithm in the MCS (Modulation and Coding Scheme) domain. It may also be a jump algorithm acting on another variable that can be mapped to MCS.

Due to different use probabilities, the different ranks will be triggered at varying intervals. Hence, with same control loop parameters they will have different convergence properties. To increase convergence properties of control loops with lower use frequencies the control loop parameters can be adjusted with respect to current use frequency. In the example with jump algorithms, the down-step size parameter $S_{down}$ may be adjusted as

$$S_{down, adjusted} = S_{down} / f_r \qquad (1)$$

where $f_r$ is the usage frequency of the rank for which the success measurement was received.

This will give the same convergence properties for all ranks. It should be noted that large steps will be taken if the usage frequency is low, which results in the control loop having a shaky behaviour. This may be undesired and therefore some other scaling could be used or simply the usage frequency may be set to zero (i.e., do not use the rank) for that rank.

The determine rank step 32 is equivalent to the determine rank step of Fig 4A. In one embodiment, the actual usage frequency is determined for all ranks. Subsequently, the rank is selected for which the actual usage frequency is the lowest (in absolute or relative terms) compared to the determined usage frequency.

In one embodiment, the reported positive and negative success measurements for each rank allows a block error rate (BLER) to be calculated which, together with the current state of the control loop, can provide a throughput prediction for each rank. One way to calculate an average BLER is to filter the success measurements through an exponential filter:

$$BLER_r(n) = (1-\alpha)BLER_r(n) + \alpha AN_r, \qquad (2)$$

where $AN_r$ is 1 for a negative success measurement, such as NACK, and 0 for a positive success measurement such as ACK for a corresponding rank r transmission. $\alpha$ is a factor between 0 and 1. When $\alpha$ is set to 1, BLER is calculated as 100% if last success measurement was negative and 0 otherwise. Thus a high value means that recent success measurements have a large impact on the calculated BLER. With a smaller value, the success measurements have an impact on BLER for a longer time. From the current state $MCS_{RI}(n)$ of the control loop a throughput estimate can be calculated as:

$$TPUT_r(n) = (1-BLER_r(n)) \cdot g(r, MCS_r(n)), \qquad (3)$$

where g() is the max throughput possible given the transport format (r, $MCS_r(n)$).

For each rank r, a usage frequency $f_r$ is assigned which depends on the estimated throughput TPUT and, in some embodiments, also on the current best rank. The usage frequency increases with increased estimated throughput:

$$TPUT_i < TPUT_j \Rightarrow f_i(TPUT_i) < f_i(TPUT_j), \qquad (4)$$

where $f_x()$ is the usage frequency for rank x.

In one embodiment, the usage frequency for a rank r is calculated from throughput according to:

$$f_r = TPUT_r/sum(TPUT_i : i = 1...r_{max}) \qquad (5)$$

where $r_{max}$ is the maximum available rank (i.e. highest number). In other words, the usage frequencies are assigned in proportion to the throughputs.

In one embodiment, $f_i = 0$ for ranks such that $| r - r_{best} | \geq t$ for some threshold t and where $r_{best}$ is the rank which has highest estimated throughput. The usage frequency can then be calculated according to:

$$f_r = TPUT_r/sum(TPUT_i : | i - r_{best} | < t) \qquad (6)$$

This will result in that the estimated best rank will be used more frequently while estimated worse ranks will be used more seldom. In an extreme case the usage frequency could be set to zero for all ranks except the best rank, the rank just above and the rank just below, i.e. t=1 in (6).

Fig 5 is a schematic diagram showing some components of the e-Node B 2 of Fig 1. A controller 50 is provided using any suitable central processing unit (CPU), microcontroller, digital signal processor (DSP), application specific integrated circuit etc., capable of executing software instructions stored in a computer program product 54, e.g. in the form of a memory. The computer program product 54 can be a memory or any combination of read and write memory (RAM) and read only memory (ROM). The memory also comprises persistent storage, which, for example, can be any single one or combination of magnetic memory, optical memory, solid state memory or even remotely mounted memory.

The e-Node B 2 also comprises an I/O interface 57 for communicating with the core network and optionally with other e-Node Bs.

The e-Node B 2 also comprises one or more transceivers 55 and a corresponding number of antennas 52 for radio communication with mobile communication terminals, as shown in more detail in Fig 2 above.

Fig 6 shows one example of a computer program product 70 comprising computer readable means. On this computer readable means a computer program 71 can be stored, which computer program 71 can cause a controller to execute a method according to embodiments described herein. In this example, the computer program product is an optical disc, such as a CD (compact disc) or a DVD (digital versatile disc) or a Blu-Ray disc. As explained above, the computer program product could also be embodied as a memory of a device, such as memory 54 of the e-Node B 2. While the computer program 71 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A method for determining a rank indicating the number of layers to be used by a multiple input multiple output, MIMO, transmitter in a network node (2) of a mobile communication network (1), the method **characterized by** the steps of:

   obtaining success measurements (30) indicating whether data frames, comprising user data, have been successfully transmitted between the network node (2) and a mobile communication terminal (3) for each one of a plurality of ranks;
   determining usage frequencies (35) for each one of the plurality of ranks based on the success measurements for the respective ranks; and
   determining the rank (32) to be used for transmission between the network node and the mobile communication terminal based on highest usage frequency; and
   wherein the step of obtaining success measurements (30) comprises obtaining positive and negative acknowledgements of previously sent data frames comprising user data, and the step of determining usage frequencies comprises, for a specific rank, increasing the usage frequency for the specific rank for positive acknowledgement results and decreasing the usage frequency for the specific rank for negative acknowledgement results.

2. The method according to claim 1, wherein the amount of change for the increased usage frequency is smaller than the amount of change for the decreased usage frequency.

3. The method according to claim 1 or 2, wherein an adjusted amount of change for the decreased usage frequency is calculated by dividing an original amount of change for the decreased usage frequency with the previously determined usage frequency for the associated rank.

4. The method according to any one of claims 1 to 2, wherein the positive and negative acknowledgements are ACKs and NACKs which are sent from the mobile communication terminal for a hybrid automatic repeat request, HARQ, algorithm used for control of transmission of data from the network node to the mobile communication terminal.

5. The method according to any one of the preceding claims, wherein the step of determining the rank (30) to be used comprises:

   selecting a rank (37) to be used for transmission between the network node and the mobile communication terminal such that a usage frequency over several iterations approaches the determined usage frequencies.

6. The method according to any one of the preceding claims, wherein the step of determining usage frequencies (36) comprises determining respective estimated throughputs for each one of the plurality of ranks based on the success measurements and determining usage frequencies depending on the estimated throughput for the respective ranks, such that ranks with a greater throughput are assigned a greater usage frequency.

7. The method according to any one of the preceding claims, wherein non-zero usage frequencies are only assigned to the rank with the greatest usage frequency and adjacent ranks.

8. The method according to any one of the preceding claims, wherein the method is repeated.

9. The method according to any one of the preceding claims, wherein the success measurements indicates whether a data frame, comprising user data, from the network node (2) has been successfully received at the mobile communication terminal (3).

10. The method according to any one of claims 1 to 8, wherein the success measurement indicates whether a data frame, comprising user data, from the mobile communication terminal (3) has been successfully received at the network node (2).

11. The method according to any one of the preceding claims, further comprising the step of: assigning initial usage frequencies (29) to each one of the plurality of ranks.

12. The method according to claim 11, wherein the step of assigning initial usage frequencies comprises assigning equal usage frequencies to each one of the plurality of ranks.

13. A network node (2) for a mobile communication network (1), the network node comprising:

   a multiple input multiple output, MIMO, transmitter (55);
   **characterized in that**:

   a controller (50) arranged to obtain success measurements indicating whether data frames, comprising user data, have been successfully transmitted between the network node (2) and a mobile communication terminal (3) for each one of a plurality of ranks; and
   wherein the controller (50) is further arranged to determine usage frequencies for each one of the plurality of ranks based on the success measurements for the respective ranks; and to determine a rank based on highest usage frequency, the rank indicating the number of layers to be used by the MIMO transmitter (55) for transmission between the network node and the mobile communication terminal; and
   wherein the controller obtains the success measurements comprising positive and negative acknowledgements of previously sent data frames comprising user data, and determines usage frequencies, for a specific rank, by increasing the usage frequency for the specific rank for positive acknowledgement results and decreasing the usage frequency for the specific rank for negative acknowledgement results.

14. A base station comprising the network node according to claim 13.

15. The base station according to claim 14, wherein the base station is an evolved node B for a Long Term Evolution network.

16. A computer program (71) comprising computer program code which, when run on a network node (2) of the mobile communication network (1), causes the network node (2) to execute the method of claim 1.

17. A computer program product (70) comprising a computer program according to claim 16 and a computer readable means on which the computer program (71) is stored.

**Patentansprüche**

1. Verfahren zum Bestimmen eines Rangs, der die Anzahl von Schichten angibt, die von einem Mehrfacheingang-

EP 2 748 940 B1

Mehrfachausgang(MIMO)-Sender in einem Netzknoten (2) eines mobilen Kommunikationsnetzes (1) zu verwenden ist, wobei das Verfahren durch folgende Schritte gekennzeichnet ist:

Erlangen von Erfolgsmessungen (30), die angeben, ob Daten-Frames, die Benutzerdaten umfassen, erfolgreich zwischen dem Netzknoten (2) und einem mobilen Kommunikationsendgerät (3) für jeden von einer Mehrzahl von Rängen übertragen wurden;
Bestimmen von Nutzungshäufigkeiten (35) für jeden der Mehrzahl von Rängen auf Grundlage der Erfolgsmessungen für die jeweiligen Ränge; und
Bestimmen des Rangs (32), der zur Übertragung zwischen dem Netzknoten und dem mobilen Kommunikationsendgerät verwendet werden soll, auf Grundlage der höchsten Nutzungshäufigkeit; und
wobei der Schritt des Erlangens von Erfolgsmessungen (30) das Erlagen von positiven und negativen Bestätigungen zuvor gesendeter Daten-Frames, die Benutzerdaten umfassen, umfasst, und der Schritt des Bestimmens von Nutzungshäufigkeiten für einen betreffenden Rang das Erhöhen der Nutzungshäufigkeit für den betreffenden Rang für positive Bestätigungsergebnisse und das Senken der Nutzungshäufigkeit für den betreffenden Rang für negative Bestätigungsergebnisse umfasst.

2. Verfahren nach Anspruch 1, wobei die Änderungsmenge für die erhöhte Nutzungshäufigkeit kleiner als die Änderungsmenge für die gesenkte Nutzungshäufigkeit ist.

3. Verfahren nach Anspruch 1 oder 2, wobei eine angepasste Änderungsmenge für die gesenkte Nutzungshäufigkeit berechnet wird, indem eine ursprüngliche Änderungsmenge für die gesenkte Nutzungshäufigkeit durch die zuvor bestimmte Nutzungshäufigkeit für den zugehörigen Rang geteilt wird.

4. Verfahren nach einem der Ansprüche 1 bis 2, wobei die positiven und negativen Bestätigungen ACKs und NACKs sind, die von dem mobilen Kommunikationsendgerät für einen hybride automatische Wiederholungsanforderungs(HARQ)-Algorithmus gesendet werden, der zum Steuern der Übertragung von Daten von dem Netzknoten an das mobile Kommunikationsendgerät verwendet wird.

5. Verfahren nach einem der vorangehenden Ansprüche, wobei der Schritt des Bestimmens des zu verwendenden Rangs (30) umfasst:

Auswählen eines zu verwendenden Rangs (37) für die Übertragung von dem Netzknoten an das mobile Kommunikationsendgerät derart, dass eine Nutzungshäufigkeit über mehrere Iterationen sich den bestimmten Nutzungshäufigkeiten annähert.

6. Verfahren nach einem der vorangehenden Ansprüche, wobei der Schritt des Bestimmens von Nutzungshäufigkeiten (36) das Bestimmen jeweiliger geschätzter Durchsätze für jeden der Mehrzahl von Rängen auf Grundlage der Erfolgsmessungen und das Bestimmen von Nutzungshäufigkeiten abhängig von dem geschätzten Durchsatz für die jeweiligen Ränge umfasst, derart, dass Rängen mit einem größeren Durchsatz eine höhere Nutzungshäufigkeit zugewiesen wird.

7. Verfahren nach einem der vorangehenden Ansprüche, wobei Nicht-Null-Nutzungshäufigkeiten nur dem Rang mit der höchsten Nutzungshäufigkeit und benachbarten Rängen zugewiesen werden.

8. Verfahren nach einem der vorangehenden Ansprüche, wobei das Verfahren wiederholt wird.

9. Verfahren nach einem der vorangehenden Ansprüche, wobei die Erfolgsmessungen angeben, ob ein Daten-Frame, der Benutzerdaten umfasst, von dem Netzknoten (2) erfolgreich am mobilen Kommunikationsendgerät (3) empfangen wurde.

10. Verfahren nach einem der Ansprüche 1 bis 8, wobei die Erfolgsmessung angibt, ob ein Daten-Frame, der Benutzerdaten umfasst, von dem mobilen Kommunikationsendgerät (3) erfolgreich am Netzknoten (2) empfangen wurde.

11. Verfahren nach einem der vorangehenden Ansprüche, ferner folgenden Schritt umfassend:

Zuweisen anfänglicher Nutzungshäufigkeiten (29) zu jedem der Mehrzahl von Rängen.

12. Verfahren nach Anspruch m, wobei der Schritt des Zuweisens anfänglicher Nutzungshäufigkeiten das Zuweisen gleicher Nutzungshäufigkeiten zu jedem der Mehrzahl von Rängen umfasst.

13. Netzknoten (2) für ein mobiles Kommunikationsnetz (1), wobei der Netzknoten Folgendes umfasst:

   einen Mehrfacheingang-Mehrfachausgang(MIMO)-Sender (55);
   **dadurch gekennzeichnet, dass**:

   eine Steuereinrichtung (50), die dazu angeordnet ist, Erfolgsmessungen zu erlangen, die angeben, ob Daten-Frames, die Benutzerdaten umfassen, erfolgreich zwischen dem Netzknoten (2) und einem mobilen Kommunikationsendgerät (3) für jeden von einer Mehrzahl von Rängen übertragen wurden; und wobei die Steuereinrichtung (50) ferner dazu angeordnet ist, Nutzungshäufigkeiten für jeden der Mehrzahl von Rängen auf Grundlage der Erfolgsmessungen für die jeweiligen Ränge zu bestimmen; und einen Rang auf Grundlage der höchsten Nutzungshäufigkeit zu bestimmen, wobei der Rang die Anzahl von Schichten angibt, die von dem MIMO-Sender (55) zur der zur Übertragung zwischen dem Netzknoten und dem mobilen Kommunikationsendgerät verwendet werden sollen; und wobei die Steuereinrichtung die Erfolgsmessungen erlangt, die positive und negative Bestätigungen von zuvor gesendeten Daten-Frames, die Benutzerdaten umfassen, umfassen, und Nutzungshäufigkeiten für einen betreffenden Rang durch Erhöhen der Nutzungshäufigkeit für den betreffenden Rang für positive Bestätigungsergebnisse und Senken der Nutzungshäufigkeit für den betreffenden Rang für negative Bestätigungsergebnisse bestimmt.

14. Basisstation, umfassend den Netzknoten nach Anspruch 13.

15. Basisstation nach Anspruch 14, wobei die Basisstation ein entwickelter Knoten B für ein Long-Term-Evolution-Netz ist.

16. Computerprogramm (71), umfassend Computerprogrammcode, der bei Ausführung auf einem Netzknoten (2) des mobilen Kommunikationsnetzes (1) den Netzknoten (2) dazu veranlasst, das Verfahren nach Anspruch 1 auszuführen.

17. Computerprogrammprodukt (70), umfassend ein Computerprogramm nach Anspruch 16 und ein computerlesbares Mittel, auf dem das Computerprogramm (71) gespeichert ist.


**Revendications**

1. Procédé pour déterminer un rang indiquant le nombre de couches à utiliser par un émetteur MIMO (émetteur à multiples entrées multiples sorties) dans un noeud de réseau (2) d'un réseau de communication mobile (1), le procédé étant **caractérisé par** les étapes suivantes :

   l'obtention de mesures de succès (30) indiquant si des trames de données, comprenant des données d'utilisateur, ont été transmises avec succès entre le noeud de réseau (2) et un terminal de communication mobile (3) pour chaque rang d'une pluralité de rangs ;
   la détermination de fréquences d'utilisation (35) pour chaque rang de la pluralité de rangs sur la base des mesures de succès pour les rangs respectifs ; et
   la détermination du rang (32) à utiliser pour une transmission entre le noeud de réseau et le terminal de communication mobile sur la base de la fréquence d'utilisation la plus élevée ; et
   dans lequel l'étape d'obtention de mesures de succès (30) comprend des acquittements positifs et négatifs de trames de données précédemment envoyées comprenant des données d'utilisateur, et l'étape de détermination de fréquences d'utilisation comprend, pour un rang spécifique, l'augmentation de la fréquence d'utilisation pour le rang spécifique pour des résultats d'acquittements positifs et la diminution de la fréquence d'utilisation pour le rang spécifique pour des résultats d'acquittements négatifs.

2. Procédé selon la revendication 1, dans lequel la quantité de variation pour la fréquence d'utilisation augmentée est plus petite que la quantité de variation pour la fréquence d'utilisation diminuée.

3. Procédé selon la revendication 1 ou 2, dans lequel une quantité de variation ajustée pour la fréquence d'utilisation diminuée est calculée en divisant une quantité de variation originale pour la fréquence d'utilisation diminuée par la fréquence d'utilisation précédemment déterminée pour le rang associé.

4. Procédé selon l'une quelconque des revendications 1 à 2, dans lequel les acquittements positifs et négatifs sont des signaux ACK et NACK qui sont envoyés par le terminal de communication mobile pour un algorithme HARQ (algorithme de demande de répétition automatique hybride) utilisé pour commander une transmission de données du noeud de réseau au terminal de communication mobile.

5. Procédé selon l'une quelconque des revendications précédentes, dans lequel l'étape de détermination du rang (30) à utiliser comprend :

la sélection d'un rang (37) à utiliser pour une transmission entre le noeud de réseau et le terminal de communication mobile de sorte qu'une fréquence d'utilisation s'approche, après plusieurs itérations, des fréquences d'utilisation déterminées.

6. Procédé selon l'une quelconque des revendications précédentes, dans lequel l'étape de détermination des fréquences d'utilisation (36) comprend la détermination de débits estimés respectifs pour chaque rang de la pluralité de rangs sur la base des mesures de succès et la détermination de fréquences d'utilisation en fonction du débit estimé pour les rangs respectifs de sorte que les rangs ayant un plus grand débit soient attribués à une fréquence d'utilisation plus grande.

7. Procédé selon l'une quelconque des revendications précédentes, dans lequel des fréquences d'utilisation non nulles sont uniquement attribuées au rang ayant la fréquence d'utilisation la plus grande et aux rangs adjacents.

8. Procédé selon l'une quelconque des revendications précédentes, dans lequel le procédé est répété.

9. Procédé selon l'une quelconque des revendications précédentes, dans lequel la mesure de succès indique si une trame de données, comprenant des données d'utilisateur, provenant du noeud de réseau (2) a été reçue avec succès dans le terminal de communication mobile (3).

10. Procédé selon l'une quelconque des revendications 1 à 8, dans lequel la mesure de succès indique si une trame de données, comprenant des données d'utilisateur, provenant du terminal de communication mobile (3) a été reçue avec succès dans le noeud de réseau (2).

11. Procédé selon l'une quelconque des revendications précédentes, comprenant en outre l'étape de : attribution de fréquences d'utilisation initiales (29) à chaque rang de la pluralité de rangs.

12. Procédé selon la revendication 11, dans lequel l'étape d'attribution de fréquences d'utilisation initiales comprend l'attribution de fréquences d'utilisation égales à chaque rang de la pluralité de rangs.

13. Noeud de réseau (2) pour un réseau de communication mobile (1), le noeud de réseau comprenant :

un émetteur MIMO (émetteur à multiples entrées multiples sorties) (55) ;
**caractérisé en ce que** :

un contrôleur (50) agencé pour obtenir des mesures de succès indiquant si des trames de données, comprenant des données d'utilisateur, ont été transmises avec succès entre le noeud de réseau (2) et un terminal de communication mobile (3) pour chaque rang d'une pluralité de rangs ; et
dans lequel le contrôleur (50) est en outre agencé pour déterminer des fréquences d'utilisation pour chaque rang de la pluralité de rangs sur la base des mesures de succès pour les rangs respectifs ; et pour déterminer un rang sur la base de la fréquence d'utilisation la plus élevée, le rang indiquant le nombre de couches à utiliser par l'émetteur MIMO (55) pour une transmission entre le noeud de réseau et le terminal de communication mobile ; et
dans lequel le contrôleur obtient les mesures de succès comprenant des acquittements positifs et négatifs de trames de données envoyées précédemment comprenant des données d'utilisateur, et détermine des fréquences d'utilisation, pour un rang spécifique, en augmentant la fréquence d'utilisation pour le rang spécifique pour des résultats d'acquittements positifs et en diminuant la fréquence d'utilisation pour le rang spécifique pour des résultats d'acquittements négatifs.

**14.** Station de base comprenant le noeud de réseau selon la revendication 13.

**15.** Station de base selon la revendication 14, dans laquelle la station de base est un noeud évolué B pour un réseau Évolution à long terme.

**16.** Programme d'ordinateur (71) comprenant un code de programme d'ordinateur qui, lorsqu'il est exécuté sur un noeud de réseau (2) du réseau de communication mobile (1), amène le noeud de réseau (2) à effectuer le procédé selon la revendication 1.

**17.** Produit-programme d'ordinateur (70) comprenant un programme d'ordinateur selon la revendication 16 et un support lisible par ordinateur sur lequel est stocké le programme d'ordinateur (71).

Fig. 1

Fig. 2

Fig. 3

Start

**30**
Obtain success
measurements

**35**
Determine
usage freq.

**32**
Determine rank

End

Fig. 4A

Start

29
Assign initial
usage freq.

30
Obtain success
measurement

35

Yes
31
Success?
No

33
Increase
usage freq.

34
Decrease
usage freq.

32
Determine rank

Fig. 4B

2
eNB

52
Ant

55
Rx/Tx

57
I/O

50
Ctl

54

Fig. 5

70

71

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010002598 A1